# EUROPÄISCHE PATENTANMELDUNG

(11) **EP 4 521 699 A1**
(43) Veröffentlichungstag der Anmeldung: **12.03.2025**
(21) Anmeldenummer: 23196350.5
(22) Anmeldetag: 08.09.2023
(51) Int. Cl.: H04L 41/16, H04L 41/14, H04L 41/0894, H04L 41/0806, H04L 41/0816, H04L 41/0895, H04L 41/122, H04L 43/50

(54) **VERFAHREN ZUM GENERIEREN VON REGELWERKEN UND/ODER BESTIMMUNGEN**

(71) Anmelder: Deutsche Telekom AG, 53113 Bonn (DE)
(72) Erfinder: HEIDER-AVIET, Andreas, Berlin (DE)
(74) Vertreter: Braun-Dullaeus Pannen Emmerling Patent- & Rechtsanwaltspartnerschaft mbB

(57) **Zusammenfassung**

Verfahren zum Generieren vom Regelwerken und/oder Bestimmungen für ein System, umfassend die folgenden Schritte:
- Anlernen einer KI anhand einer technischen Dokumentation und/oder einer Spezifikation und/oder eines Datenmodells,
- Anlernen der KI anhand eines Zielkontextes und/oder einer Eingabemethode,
- Anlernen der KI anhand einer Ausgabemethode und/oder eines Ausgabetyps,
- Feinjustierung der KI mit einer technischen Zielerklärung/Absichtserklärung als Eingabe, darauffolgender "Interpretation" und Ausgabegenerierung, und iterativen Verbesserungen,
- Nutzung der KI anhand von Intent-basierten Eingaben und automatisch generierter Ausgaben in Form von Policies, welche technische Änderungen an einem System beschreiben und auf ein System angewendet werden.

## Beschreibung

Die Erfindung betrifft ein Verfahren zum Generieren vom Regelwerken und/oder Bestimmungen umfassend das Anlernen einer KI anhand einer technischen Dokumentation und/oder einer Spezifikation und/oder eines Datenmodells, das Anlernen der KI anhand eines Zielkontextes und/oder einer Eingabemethode, und das Anlernen der KI anhand einer Ausgabemethode und/oder eines Ausgabetyps.

Komplexe System beinhalten typischerweise langwierige Planungsprozesse, regulatorische- und Sicherheitsüberprüfungen, detaillierte Design- und Bauphase, Tests, sowie operationelle Steuerungskreisläufe. Die Konfiguration eines solchen Systems in Form eines Mobilfunknetzes, speziell die eines RAN (Radio Access Network) ist ein komplexer und individueller Prozess eines Mobile Network Operators (MNO's).

Bei diesem Prozess ist eine Vielzahl von Parameter zu betrachten, untereinander bestehende Abhängigkeiten zu bedenken und externe Faktoren zu beachten. Im Fall vom Mobilfunknetzen gibt es viele Parameter, Abhängigkeiten und externe Faktoren, unter anderem in Bezug auf den Umfang/Größe, Geografie/Topologie, länderspezifische Aspekte, genutzte Technologien (Hardware, Software, Frameworks, Standard etc.) und all dies oft gemischt in einer großen Anzahl verschiedener Systemkomponenten, deren Unterkomponenten bzw. Untersystemen, in verschiedenen Versionen und Kombinationen. Generell betrachtet die Netzplanung und das Netzdesign die Standorte, die Basisstationen, die Baumaßnahmen, das Spektrum und die nutzbaren Frequenzen und/oder die Infrastruktur.

Als Radio Planning im engeren Sinn können die Aktivitäten zur Ausgestaltung und Verbesserung der Netzabdeckung (Empfang), Kapazität (z.B. Bandbreite) und/oder Netzqualität (u.A. Robustheit) bezeichnet werden, welche je nachdem über Softwareobjekte und -Parameter eingestellt werden. Diverse Aktivitäten wie das Bereitstellen eines Core Networks, Backhauls, EndtoEnd (E2E) Infrastruktur, internationales Roaming und weitere Verbindungen zum Festnetz und Internet, vertragliche und rechtliche Aspekte, sowie Markt- und geschäftsseitige Anforderungen, die technisch umgesetzt werden müssen, sind ebenfalls Teil eines Mobilfunknetzes bzw. des Mobilfunkmanagements, dem E2E Service.

Die Konfiguration eines Mobilfunknetzes (speziell des RAN) ist somit ein komplexer und individueller Prozess eines MNOs, welcher u.A. Abhängigkeiten hat zu den genutzten Komponenten, verfügbaren Funktionen (Feature), Rollouts, angebotene Services, eingesetzte Tools, Netzstatus, Wartungsarbeiten etc.; daher unterliegt das Konfigurationsmanagement ständigen technischen Änderungen. Diverse Details wie Hardware/Software-Versionen, interne/externe Bereitstellungszeiten, dynamische Netzanpassungen, z.B. unvorhergesehene Ereignisse wie Ausfälle; soziale Events wie Konzerte oder Services wie Network Slices, müssen beachtet, geplant und verwaltet werden, wobei das Netzdesign und -management im der RAN Domäne durch unterstützende Tools eine der Kernaufgaben eines Mobile Network Operators ist.

Zu der Radio Planung gehören auch unabhängig von physischen Änderungen regelmäßig Frequenzpläne, Antennenparameter, Zellparameter, Handover-, und Mobilitätsparameter, sowie lokale und netzweite Berechnungen bezüglich der Netzabdeckung, Netzkapazität und Netzservices. Beispielsweise kann es für die Mobilfunkversorgung an Bahnlinien und Straßen - auf denen sich die Nutzer/Endgeräte schnell bewegen und dadurch häufig die Funkzelle wechseln (möglichst ohne Verbindungsabbruch) - angepasste Zell-Handover Parameter geben; oder für dicht besiedelte Regionen oder Orte wie Stadien und Innenstädte - in denen möglichst alle gleichzeitigen Nutzer einen guten Service bekommen sollten - angepasste Ressourcekapazitätsparameter geben. Weitere Beispiele für Policies sind Netzkonfigurationen welche fremde Netze, Netzkonfigurationen und Zellen berücksichtigen, u.A. beim Nationalen Roaming/Network Sharing/MOCN (Multi Operator Core Network) /MORAN (Multi Operator RAN) oder an Ländergrenzen bei denen ein möglichst unterbrechungsfreier Übergang (engl: cross-border Handover) zum ausländischen Mobilfunknetz erreicht werden soll..

Solche Vorgaben aus unterschiedlichen Gründen, wie Business, Geographie und Technik, müssen in der - u.U. temporären - Netzkonfiguration berücksichtigt werden, und dies während der Planung, dem Design und im operationellen Betrieb. Ungültige Konfiguration können nicht nur den Ausfall einzelner Zellen verursachen, sondern auch, je nachdem wie das Netz gebaut und gemanagt ist, den Ausfall von größeren Netzabschnitten. Valide Konfigurationen und solides Konfigurationsmanagement sind essenziell für das System und den damit bereitgestellten Service.

Konkret gibt es trotz Standards (ETSI, ITU, 3GPP etc.) viele Spezifika in der jeweiligen Implementierung eines Netzausrüsters oder Komponentenherstellers, welche im Detail speziell konfiguriert und je nach Bedarf rekonfiguriert werden müssen. Hinzu kommt, dass ggf. nicht alles aus dem Standard, bzw. einer jeweiligen Version des Standards implementiert ist und/oder Teile anders umgesetzt sind. Gegebenenfalls sind Teile nicht im Detail ausspezifiziert und/oder es gibt interne oder externe verflochtene Abhängigkeiten zwischen Objekten und Parameter. Daraus folgt, dass es manuell kaum noch mit vertretbarem Aufwand möglich, alle Details zu kennen bzw. zu respektieren, vor allem wenn die Netze immer schneller geplant und/oder dynamischer auf Anforderung konfiguriert und optimiert werden sollen.

Diese Anmeldung stellt sich die Aufgabe, die Automatisierung des Designs und Managements von komplexen Systemen, insbesondere das Verfahren des Übergangs zwischen der Konfigurationsplanung und dem operationellen Betrieb, zu verbessern. Das erfindungsgemäße Verfahren betrifft somit das technische Management, insbesondere die Automatisierung der aus der Planung, der Optimierung, den Serviceanforderungen, den Betriebsanforderungen den Geschäftsanforderungen hervorgehenden Verwaltung der Konfiguration, sowie wie Änderungen in einem komplexen System gehandhabt werden.

In der Anmeldung wird der eingangs schon beschriebene konkrete Anwendungsfall in einem Mobilfunknetzwerk zur Veranschaulichung eines komplexen Systems herangezogen. Die Erfindung beschränkt sich aber nicht auf dieses Beispiel eines komplexen Systems. Im Weiteren wird das gesamte Mobilfunknetzwerk somit lediglich als Beispiel für ein komplexes System dargestellt und der Einfachheit halber auch "System", "Netz" oder "RAN" als Alias hierfür benutzt.

Die Aufgabe wird gelöst durch ein Verfahren mit den Merkmalen des Anspruchs 1. Einige der besonders bevorzugten Ausgestaltungen des Verfahrens werden mit den Unteransprüchen gefasst. Ein Grundgedanke des erfindungsgemäßen Verfahrens ist, eine KI (künstliche Intelligenz) anzulernen inklusive Feinjustierung der KI mit einer technischen Zielerklärungen/Absichtserklärungen (engl.: Intent) als Eingabe vorzunehmen, darauffolgend, insbesondere innerhalb der KI, eine Interpretation und Ausgabegenerierung vorzunehmen, und optional mit iterativen Verbesserungen, also Verbesserung der Klarheit der Eingabe, Bereitstellen von Kontextinformationen und/oder Korrektur der gewünschten Ausgabe umzusetzen, sowie die anschließende Nutzung der KI anhand von Intent-basierten Eingaben und automatisch generierter Ausgaben in Form von Policies und/oder Rules, welche technische Änderungen an einem System beschreiben und auf ein System angewendet werden. Die Nutzung der Erfindung kann ebenfalls iterativ und interaktiv erfolgen und der weiteren Feinjustierung dienen indem mit einem Intent als Eingabe, darauffolgend innerhalb der KI eine automatische Interpretation und Ausgabegenerierung, und in einem Kreislauf Korrekturen, Verbesserungen und/oder mehr Kontext damit die finale generierte Ausgabe in Form von validen, korrekten Policies und/oder Rules - sofern angewandt - valide, korrekte technische Änderungen an einem System bewirken.

Ein Kerngedanke der Erfindung ist es somit, zur weitgehend automatisierten Steuerung eines Systems erfindungsgemäß generierte (Konfigurations-) Regeln (engl. Rules) und "Regelwerke/Bestimmungen" (englisch. Policies) einzusetzen, welche das Verhalten des Systems vorgeben und welche auf das System angewandt werden.

Auf diese Weise müssen Policies und/oder Rules nicht mehr mühsam und fehleranfällig manuell definiert werden, sondern die Definition und Erstellung wird intent-bezogen automatisiert. Dies basierend auf einer KI, vorzugsweise unter Nutzung eines generativen LLM (large language model), welches im gegebenen Beispiel eines Mobilfunknetzes beispielsweise auf RAN Konfiguration (3GPP Spezifikation, Datenmodelle, herstellerspezifische Spezifikationen und Datenmodelle etc.) und dem gewünschten Output, wie z.B. Python oder Rego code, trainiert ist.

Das Bereitstellen und die Nutzung der vortrainierten KI anhand Intentbasierter Eingaben und automatisch generierter Ausgaben in Form von Policies sind somit ein wesentlicher Gesichtspunkt der Erfindung, wobei Policies technische Änderungen an einem System beschreiben und auf ein System angewendet werden können, und wobei je nach Kontext fach-und/oder herstellerspezifische Grundlagen, wie z.B. Datenmodelle und Parameterbeschreibungen notwendig sind.

Eine KI im Sinne dieser Erfindung nutzt maschinelles Lernen bevorzugt auf Basis eines insbesondere selbstlernenden Algorithmus. Die KI kann eine Cloudbasierte, insbesondere modulare Anwendung sein, alternativ oder ergänzend hierzu teilweise oder vollständig auf einem Computer installiert sein. Die zur Eingabe und Ausgabe erforderlichen Schnittstellen der KI sind aus dem Stand der Technik bekannt und werden deshalb hier nicht weiter erläutert.

Der Begriff "Intent" bzw. dessen Bedeutung und Umfang im Bereich der Technik/KI/Automatisierung wird unterschiedlich interpretiert, generell wird davon ausgegangen, dass ein Zielzustand bzw. eine Absicht definiert wird. Ein Intent spezifiziert somit die Erwartungen, einschließlich der Anforderungen, Ziele und Einschränkungen für einen bestimmten Dienst (Service), System oder (Netzmanagement-)Prozess. Diese Absicht kann Informationen über ein bestimmtes Ziel und möglicherweise einige damit verbundene Details enthalten. Die Absicht drückt somit aus, "was" erreicht werden sollen und nicht, "wie" es erreicht werden soll.

Eine Regel (Rule) ist gemäß der Definition im TM Forum Information Framework Suite, GB922 Policy, Release 18.0.1, Oktober 2018 ein intelligenter Datencontainer. Er enthält Daten, die festlegen, wie die Regel in einer verwalteten Umgebung verwendet wird, sowie eine Verhaltensspezifikation, die festlegt, wie die verwalteten Einheiten, auf die sie angewendet wird, interagieren. Die enthaltenen Daten unterteilen sich in vier Typen:
1) Daten und Metadaten, die die Semantik und das Verhalten der Regel definieren und das Verhalten, das sie dem Rest des Systems aufzwingt,
2) eine Gruppe von Ereignissen, die verwendet werden können, um die Auswertung der Bedingungsklausel einer Regel auszulösen,
3) eine Gruppe von Bedingungen, die durch die Regel zusammengefasst werden, und
4) eine Gruppe von Aktionen, die durch die Regel zusammengefasst werden.

Eine Policy ist eine bewusste Zusammenstellung von Regeln (Rules), um bestimmte Entscheidungen zu lenken und rationale Ergebnisse zu erzielen. Sie soll die reale Welt beeinflussen, indem sie die getroffenen Entscheidungen lenkt. Die Policy ist demgemäß ein Satz von Regeln zur Verwaltung und Kontrolle des Zustands eines oder mehrerer verwalteter Objekte.

Ein Policy-Modell kann nach TM Forum auch als Triplett angesehen werden, das aus einer Ereignisklausel, einer Bedingungsklausel und einer Aktionsklausel besteht. Hier bedeutet "Klausel" einfach, dass ein oder mehrere Ausdrücke verwendet werden können, um Ereignisse, Bedingungen und/oder Aktionen zu definieren. Einfach ausgedrückt, werden Ereignisse verwendet, um die Auswertung einer oder mehrerer Bedingungen auszulösen. Wenn die Bedingungen zu TRUE ausgewertet werden, können eine oder mehrere der mit dieser Policy verbundenen Aktionen ausgeführt werden. Im der allgemeinen Verwendung, und auch im Rahmen der Erfindung gelten Policies jedoch auch "an sich", dies bedeutet es wird nicht unbedingt ein Event benötigt, sondern Policies können auch direkt angewandt werden, z.B. auf Objekte aus einem Inventar.

Unter Inventar sind Funktionen zu verstehen, welche strukturierte Daten sammeln und bereitstellen, meist über eindeutige IDs (Referenzierungen). Diese Daten können Services und Ressourcen betreffen, wobei Ressourcen physische und virtuelle Elemente sind. Die Beziehungen zwischen den Daten, Metadaten und der Status sind ebenfalls im Inventar. Meist wird ein Inventar ein einer Datenbank gespeichert und/oder ist über Föderationstechniken verteilt gespeichert und ist navigierbar. Weiter kann ein Inventar auch weitere Inhalte wie z.B. Anwendungen, Benutzer, Templates oder Objektinstanzen beinhalten und auch weitere Funktionen wie Übersichten, Reportings, Kataloge, Discovery&Reconciliation, Skalierung etc.

Policies und das dazugehörige Policy Management sind demnach essentielle Teile eines Mobilfunk-Netzmanagements, insbesondere für das RAN: Durch sie wird klar und nachvollziehbar festgelegt was wie wann wo (und wegen der Nachvollziehbarkeit auch "warum") geändert bzw. sichergestellt werden soll, z.B. lokale Coverage-Optimierungen (bessere Netzabdeckung), Radio Ressourcen für Slices, spezielle handover Regeln für Bahnstrecken oder an Grenzregionen, dynamische Abstrahlungsanpassungen etc.

Erfindungsgemäß werden Änderungen vorzugsweise nicht direkt im System konfiguriert, wie hier am Beispiel eines Mobilfunknetzes erläutert, sondern über Policies gemanagt. Policies können dabei variieren, z.B. von einfachen Policies, welche gewisse Parameterwerte für gewisse Komponenten vorgeben, beispielsweise Zellen, bis hin zu komplexen Policies mit diversen Selektionskriterien, Abhängigkeiten, Bedingungen und ggf. kodierten Anpassungen, z.B. für komplizierte Services wie ein Campus Netzwerk, privates Netz, oder Network Slice. Solche speziellen Services, welche u.A. abgestimmte Konfigurationsänderungen an mehreren Stellen in einem System benötigen, lassen sich mit Kl-generierten Policies einfacher umsetzen. Unter diese Konfigurationsänderungen fallen beispielsweise Sicherheitsmaßnahmen, damit nur bestimmte Teilnehmer Teil eines privaten Netzes sind.

Policies können dabei eigene Objekte sein, welche wiederrum validiert, gemanagt, benutzt, referenziert, gehasht, gehandelt, gespeichert und/oder kodiert werden. Die Speicherung und/oder Referenzierung, z.B. über einen Smart Contract, einer "ID" für ein derartiges Objekt, z.B. in der Form eines Hashes in einem Distributed Ledger (Blockchain ist eine spezielle Form von Distributed Ledger Technology, DLT) basierten System, ist eine bevorzugte Ausführungsform der Erfindung. Weiter ist auch ein Marktplatz mit oder ohne DLT/Smart Contracts eine mögliche Ausführungsform, in der mit Policies und/oder der Nutzung von Policies und/oder derartige (auf spezielle Fachgebiete) trainierte Kls und/oder der Nutzung (auf spezielle Fachgebiete) trainierter Kls gehandelt und interagiert werden kann. Damit Policies und Regeln erstellt und angewandt werden können müssen sie zum System bzw. zum jeweiligen Subsystem passen.

In einer besonders bevorzugten Ausführungsform bezieht sich das erfindungsgemäße Verfahren auf das Mobilfunk-Netzmanagement, insbesondere die Automatisierung der aus der Netzplanung, der Netzoptimierung, den Serviceanforderungen, den Betriebsanforderungen den Geschäftsanforderungen hervorgehenden Verwaltung der Netzkonfiguration, sowie wie Änderungen im Netz gehandhabt werden.

Aktuell gibt es KI-Unterstützung in bestimmten Bereichen von Mobilfunk-Netzwerken, etwa der Netzplanung (Versorgungs- /Coverageberechnung) und der Netzoptimierung (z.B. ANR, Energieeinsparung etc.), welche meist auf historischen Performance Metriken aufbaut und nicht intent-basiert ist. Das E2E Netzmanagement ist über verschiedene Systeme und Prozesse verteilt, wobei Automatisierung meist über Workflows oder z.B. fest definierte RAN-Optimierungsalgorithmen gelöst ist, und wichtige Teile wie (RAN) Element Manager nur als proprietäre Lösungen von Netzausrüstern bereitgestellt werden.

Aufgrund der heutigen Situation mit heterogenen Systemen, Subsystemen und Partnersystemen unterschiedlicher Hersteller können komplexe Systeme nur gemanagt werden, wenn die notwendigen Einstellungen, d.h. die Nutzung der Konfigurationsparameter, auch frei verfügbar und nutzbar sind für die MNOs und die von MNOs eingesetzten Tools. Dies gilt auch Domänen- und Standardübergreifend, z.B. auch für Core, Transport, WAN, private Netzen, Software-Defined Systemen, und/oder B2B APIs oder durch Interoperabilität verschiedener Technologien, beispielsweise Funk-Technologien.

Insbesondere spezielle Operation nahe der Echtzeit, (z.B. Netzkonfigurationsanpassungen) werden möglichst nahe an der RAN Hardware vor Ort durchgeführt, um Verzögerungen durch Signallaufzeiten und/oder Zwischenschritte zwischen Gerät, Basisstation und der Anwendung (Ausführungsumgebung/Server/Datacenter) zu verringern. Als nahe Echtzeit werden im Rahmen der Erfindung Zeitspannen von 10 Millisekunden bis 10 Sekunden bezeichnet, wobei dieser Begriff in der Technik nicht eindeutig definiert ist, und die Mechanismen der Erfindung sich in den Ausführungsformen ebenfalls für Echtzeit- und Nicht-Echtzeit-Systeme benutzen lässt.

Für Operationen in nahe Echtzeit werden daher z.B. in der O-RAN Architektur (https://docs.o-ran-sc.org/en/dawn/architecture/architecture.html) Policies über das "A1-Interface" an den "Near-Real Time RAN Intelligent Controller" übergeben damit diese in bzw. über "xApps" angewendet werden und das Netz entsprechend konfigurieren.

Eine Kompatibilität mit bzw. die Integration in technischen Spezifikationen wie 3GPP TS 28.312 ("Intent driven management services for mobile networks", aktuelle Version unter https://www.etsi.org/deliver/etsi_ts/128300_128399/128312/17.04.01_60/t s_128312v170401p.pdf), und/oder ONAP (https://www.onap.org/architecture) und/oder O-RAN (https://www.o-ran.org) sind mögliche Anwendungen, speziell auch die Nutzung der erfindungsgemäßen KI und/oder Policies in xApps und/oder rApps.

Mit der Erfindung können diverse Policies je nach Fachgebiet besser und schneller erstellt werden, und/oder in einer besonders bevorzugten Ausführungsform das gesamte System alleine über Policies definiert werden. Die Erfindung ermöglicht die nachvollziehbare, kontrollierbare Trennung von Designtime und Runtime über Policy Objekte, z.B. indem nur validierte Policies in der Runtime benutzt werden können.

Ein besonderer Vorteil der Erfindung ist, dass automatisch generierte Policies konformer zu den Vorgaben und technischen Möglichkeiten sind. Sie beinhalten weniger Fehler oder Konflikte, was die Auflösung hin zu einer validen finalen Konfiguration einfacher macht.

Ein weiterer besonderer Vorteil des Verfahrens ist, dass es rekursiv benutzt werden kann, d.h. für Teile des Ziels/Eingabe und/oder Teile der Ausgabe und/oder Teile des Systems können einzelne oder alle Verfahrens-Schritte selbst wieder angewandt werden. Ebenso kann die Erfindung so eingesetzt werden, dass mehrere "Teilsysteme im Sinne der Erfindung" miteinander kombiniert werden, beispielsweise mit jeweils einer "Fach-KI" welche genau ein "Experte" für eine bestimmte Technologie oder Komponente ist.

Insofern ermöglicht die Erfindung eine automatische Netzpolicykonfiguration über Intent-basierte Eingaben, vorzugsweise integriert in eine E2E Konfigurationspipeline. Neben dem Zeitgewinn ermöglicht dies die Konfiguration bessere, robustere Systeme oder deren einfachere Anpassung. Der E2E Prozess von der Planung bis zur Runtime wird in unabhängigen Schritten KI-basiert unterstützt; die Separierung der Design- und Runtime geschieht durch klare, überprüfbare, also kontrollierbare und nachvollziehbare technische Objekte mittels Policies.

Insbesondere können Policies ein Kontrollpunkt menschlicher oder anderer Überprüfung sein, zwischen (KI-unterstütztem) Systemdesign und vollautomatisierter (KI-unterstützter) operativer Runtime, in anderen Worten werden Konfigurationsänderungen nicht dem automatisierten System überlassen (direkt angewandt) sondern sie sind über Policies nachvollziehbar und kontrollierbar.

In einer bevorzugten Ausführungsform ist die Eingabe eine abstrakte und/oder komplexe Beschreibung einer Zielkonfiguration eines Systems, welches über eine Policy als Ausgabe erreicht werden soll. Vorzugsweise ist die Eingabe eine konkrete (einzelne) Aufgabe in der eine Konfigurationsanpassung eines Systems über eine Policy als Ausgabe erreicht werden soll, und/oder ist die Eingabe eine gewünschte Parameter-und/oder Objektänderung eines Systems und die Ausgabe eine Policy, um diese Änderung zu erreichen.

Eine besonders bevorzugte Ausführungsform ist das Zusammenfassen bzw. Konsolidieren mehrere Policies (Stacking) für eine finale Konfiguration. Dabei werden beispielsweise die Instruktionen analysiert und aufeinander und/oder auf (echte und/oder simulierte) Inventarobjekte angewandt, bzw. je nachdem in unterschiedlicher/angepasster Reihenfolge, um eine einzige weitgehend deterministische Policy zu erhalten. Dabei können je nach Situation auch Teile einer Policy optimiert werden und/oder Konflikte zwischen verschiedenen Policies aufgelöst und/oder offengelegt werden. Dies ermöglicht eine Klärung, z.B. durch andere bzw. besseren Eingaben zur Änderung der Policy.

Das insbesondere KI-unterstützte Stacking der Policies ermöglicht eine effiziente Ausführung der Änderungen bei einer Simulation und Konfliktlösung, beispielsweise in einem Digital Twin, und eine robustere Rekonfiguration zur Runtime.

Das "Inventar" kann im Kontext der Erfindung vielseitig sein, generell beinhaltet ein Inventar Details über das System, z.B. alle Komponenten/Elemente eines Netzes mit dessen Konfiguration. Netztopologische Daten, Metadaten, und/oder zusätzliche Daten können vorhanden sein, ebenso können Inventare verteilt und/oder aufgeteilt sein, z.B. Service- und Resourceninventar, Planungsdatenbanken, Topologieinventare, oder der Einsatz verschiedener Datenbanken oder Ablagen für unterschiedliche Teile des Systems.

Je nach Ausführungsform kann die KI mit einem Inventar verbunden sein respektive Datenzugriff haben, und/oder einem Simulator/Digital Twin, und/oder einem System, und/oder einer sonstigen Datenbasis, um den aktuellen Zustand und/oder Umfang und/oder weitere Informationen zur korrekten Ausgabegenerierung zu nutzen.

In einer vorteilhaften Ausführungsform kann das gesamte System mit dieser Policy definiert werden, wobei diese Policy je nachdem dynamische, zellindividuelle und/oder zeitdiskrete Finalkonfigurationen, beispielsweise für das gesamte Netz sein können, d.h. Details können trotzdem je nachdem pro Zelle unterschiedlich sein.

In einer weiteren vorteilhaften Ausführungsform ist das gesamte System heterogen und besteht aus verschiedenen Teilsystemen, und/oder das System bzw. die Teilsysteme nutzen unterschiedliche Technologien, Komponenten, Standards, und/oder spezielle proprietäre Inhalte. Vorzugsweise ist das System eine gemanagte Infrastruktur und/oder ein Mobilfunknetz.

In einer anderen bevorzugten Ausführungsform kann die Erfindung und/oder Teile der Erfindung rekursiv benutzt werden. Mit rekursiv ist gemeint, dass für Teile des Ziels/der Eingabe und/oder Teile der Ausgabe und/oder Teile des Systems einzelne oder alle Verfahrensschritte wieder genutzt/angewandt werden.

Vorzugsweise kommen die Dokumentation/Spezifikation und/oder Datenmodelle aus einem Standard, wie z.B. 3GPP, und/oder aus für die Anwendung/Nutzung/Konfiguration, z.B. technische Objekte, Parameter, Abhängigkeiten, Empfehlungen etc. notwendigen Elementen von Herstellern, wie z.B. von einem RAN Netzausrüster.

Eine weitere vorteilhafte Ausführungsform ist das automatische Testen über einen Simulator bzw. Digital Twin. Dabei kann der Digital Twin verschiedene Ausprägungen haben, z.B. lediglich ein Inventar mit dem virtuellen Objekt bestehend aus dem Datenmodell (oder Teilen davon), d.h. einigen Objekten und Parametern; oder ein komplett funktionsfähiges virtuelles System.

Im Sinn der Erfindung können einzelne oder mehrere Policies auf Testdaten, einen Simulator und/oder einen Digital Twin angewendet werden, um das Ergebnis, d.h. die Konfigurationsänderung und ggf. das Systemverhalten, zu testen und zu bewerten. Ein so genannter closed-loop (geschlossener Kreis) ist dem Fachmann bekannt und bezeichnet meist einen kontinuierlichen Kreislauf bei dem ein System gemessen bzw. überwacht wird und diese Daten überprüft werden ob sie den Vorgaben entsprechen und ggf. - vorzugsweise unmittelbar - durch eine Rekonfiguration nachgebessert wird.

Zur Anpassung einer Policy kann ein closed loop benutzt werden um die (oder ggf. Teile der) KI zu verbessern, insbesondere während des Trainings, Finetunings und Nutzung, wobei der closed loop automatisiert ablaufen kann.

Je nach Ausführungsform kann bei der Benutzung eines Simulators/Digital Twins und/oder closed loop auf ein System/Inventar zugegriffen werden, beispielsweise für den aktuellen Zustand und/oder Umfang und/oder für weitere Informationen zur korrekten Ausgabegenerierung.

Vorteilhaft ist es, wenn das Ergebnis des Anwendens auf einen Simulator/Digital Twin für eine Verifikation genutzt wird, welche als Eingabe für einzelne oder alle Schritte des erfindungsgemäßen Verfahrens eingesetzt wird.

Ebenso vorzugsweise kann das Ergebnis des Anwendens zur Verbesserung der KI genutzt und/oder die Verifikation als Kontrollpunkt für weitere Anwendungen/Exekution auf einem System genutzt werden.

Bevorzugt können für diversen Schritte und/oder Technologien und/oder Komponenten des Systems verschiedene, möglichst unabhängige KIs benutzt werden, z.B. für spezielle Policies je nach Fachbereich/Domäne, zur Policy Validierung, zum Stacking, zum Testen, zum Verifizieren; beispielsweise um eine Kompromittierung oder sich durchschleifende Fehler zu vermeiden, und/oder um verteilt nutzbar zu sein, und/oder für speziell angepasste KIs.

Je nach Ausführungsform können für weitere Schritte verschiedene KIs integriert werden, z.B. KI-unterstützte Netzplanung (Versorgungs-/Coverageberechnung), Netzoptimierung (z.B. Zellnachbarschaft, Energieeinsparung etc.).

Optional oder ergänzend kann die KI der Erfindung historische Daten (z.B. Performancedaten, Probleme/Alarme etc.), Geodaten, Livedaten (aus dem eigenen System/Mobilfunknetz), alternative Planungs-/Designmöglichkeiten und/oder externe Daten (z.B. von anderen Systemen, KIs, Partnern, Marktplatz etc.) nutzen, um Policies und/oder eine gewünschte Konfiguration zu generieren.

In einer Ausführungsform können Policies in einem Repository und/oder Versionskontrollsystem wie z.B. git gespeichert werden. Unabhängig oder Ergänzen können Mechanismen zum konsolidieren (engl: merge) von git oder git-ähnlichen Systemen benutzt werden und das stacking durch merging erreicht werden. In letzterem Fall können die Objekt- und Parameteranpassungen dateibasiert und/oder Objekt-/Parameterbasiert verglichen und ggf. automatisch (z.B. regelbasiert) ausgeführt werden.

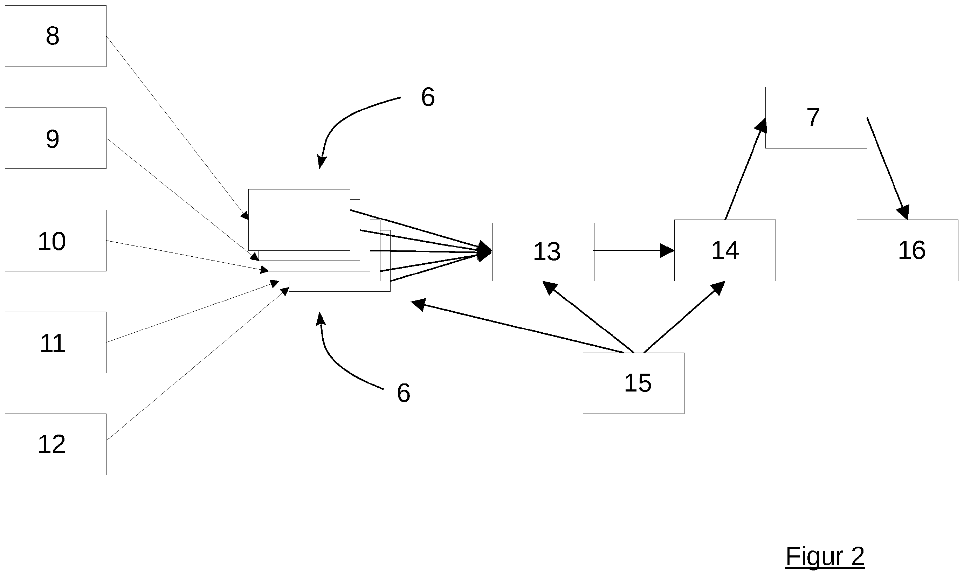

Weiter kann die Erfindung in ein kontinuierliches Systemkonfigurationsmanagement integriert werden, eine derartige pipeline kann eine CI/CD Umgebung (Continuous Integration/Continuous Delivery. "CD" kann auch Continuous Deployment bedeuten) sein. Die Policygenerierung und/oder die mögliche E2E Kette (Figur 2) können somit automatisch ausgeführt werden, wobei es der Implementierung des Anwenders obliegt ob eine explizite (z.B. menschliche) Kontrolle durchgeführt wird bevor die Systemänderung ausgeführt wird.

Je nach Ausführungsform bzw. Implementierung kann die KI bestehen aus bzw. explizit/implizit benutzen: Neuronale Netze, Maschinelles Lernen (ML), Deep Learning, Reinforcement Learning, Self-Supervised Learning, Diskriminative KI (Beziehungsverständnis), Generative KI (Prediktion/neue Inhalte erstellen), Large Language Models (LLM) und/oder Generative LLMs. Fähigkeiten wie Identifizierung, Erkennung, Klassifizierung, Interpretation, Analyse, Informationsextraktion, Synthetisierung, Übersetzung, Entscheidungsfindung, Generalisierung, Deduktion, Empfehlungen, Weiterlernen, Codegenerierung, Spezifizierung, Encoding, Decoding, Eingabeverarbeitung, Ausgabeerzeugung und/oder Selbstüberwachung können somit Teil der KI sein. Ein Stand der Technik Beispiel mit vielen dieser Fähigkeiten ist ChatGPT (https://openai.com/chatgpt).

Vorzugsweise können templates für Policies benutzt werden, und diese ggf. auch aus einem Inventory oder Katalog kommen. Je nach Ausführungsform können einzelne Schritte eventbasiert und automatisiert stattfinden, z.B. die Validierung einer neuen Policy, Testen, und erneutes Stacking. Die Separierung der Design- und Runtime wird durch klare, überprüfbare (kontrollierbar und nachvollziehbar) technische Objekte (Policies) sichergestellt. Das (ggf. KI-unterstützte) Stacking der Policies ermöglicht eine effiziente Ausführung der Änderungen bei der Simulation und eine robustere Rekonfiguration zur Runtime.

Einzelne Policies können nur einen Teil optimieren, dies kann sich jedoch zu Ungunsten anderer Policies auswirken. Ein Beispiel hierzu ist die garantierte Netzqualität versus Energiesparen. Durch das erfindungsgemäße Verfahren, der vorzugsweisen Analyse der Auswirkungen zum Beispiel in einem separierten Digital Twin, und dem vorteilhaften Stacking von Policies und kann die Konfigurationsvalidierung und die Konfigurationspipeline automatisiert werden und kontrollierbar bleiben.

Zu beachten ist, dass ein solcher Digital Twin, wie er bereits in der Industrie eingesetzt wird, das echte System nur dann virtuell richtig abbilden kann, wenn die Dokumentation und Nutzung der Konfigurationsparameter auch offen und frei verfügbar sind, also beispielsweise lizenzfrei, zur freien Verwendung für die KI. Erfindungsgemäß wird eine KI anhand einer Dokumentation und/oder Spezifikation und/oder eines Datenmodells und/oder weiteren Inhalten trainiert werden, damit es diese Details "versteht".

"Verstehen" ist hier auf den Stand der Technik bei KI bezogen und meint: In Folge von (nach-)Training, (nach-)Feinjustierung, (nach-)Testen können weitgehend valide (erscheinende) Inhalte mit weitgehend validem Syntax und weitgehend valider Semantik von der KI wiedergegeben werden, um damit (normalerweise) valide Policies erstellen zu können. Das Verstehen der KI erfordert somit nicht, dass die KI "einen tieferen Sinn" in "menschlicher Art und Weise" erkennt.

Je nach Kontext, Einsatz, Typ, Situation etc. ist eine passende Ausgabemethode, Ausgabeform und/oder ein passender Ausgabetyp notwendig. Im Falle einer Konfiguration oder deren Änderung kann die Policy in imperativer, deklarativer und/oder expressiver Textform bzw. Codeform sein, um damit die Anpassungen durchzuführen.

Im gegebenen Fall einer Konfigurationsänderung, z.B. eines RAN, muss die Policy auf die jeweilige (Komponenten bzw. Netzausrüster-) Spezifikation, beispielsweise das Datenmodell, die interne Struktur, die Objekt- und Parameterbenennung, die Abhängigkeiten etc., angepasst sein, damit die Policy angewendet werden kann.

Gleiches gilt für andere Domänen, Komponenten, Technologien etc.: Die KI muss fachspezifisch und/oder aufgabenspezifisch trainiert sein, und mit den notwendigen technischen Komponenten-/Konfigurationsdetails, und auch die passende Ausgabeform beherrschen. Diverse Ausgabe"sprachen" bzw. Formate sind möglich, im Bereich Policy Management kann im Sinne der Erfindung u.A. Rego, Drools, Python, Nirmata, XML bzw. XACML (Extensible Access Control Markup Language), MiniZinc benutzt werden. Im Prinzip aber auch für den jeweiligen Einsatzzweck geeignet Formate, Protokolle oder Sprachen wie z.B. YAML, TOSCA, YANG, Ruby, Go, Rust, Java, C++, C#, Assembler, JSON, HTTP, HTTP/2, HTTP/3 bzw. QUIC, Shell scripte, etc.

Die Struktur von Policies kann in einer Ausführungsform der Erfindung einem bestimmten Format entsprechen, z.B. den Definitionen von MEF, ETSI oderTMForum. Wie bereits erläutert ist je nach Kontext, Einsatz, Typ, Situation etc. eine passende Eingabemethode, Eingabeform, und/oder Eingabetyp notwendig, wobei "intent-basiert" nach aktuellem Stand der Technik im Detail unterschiedlich interpretiert werden kann. Generell wird davon ausgegangen, dass lediglich ein Zielzustand bzw. eine Absicht (Intent) definiert wird, ohne Details dazu "wie" das Ziel erreicht werden soll.

Im Sinn der Erfindung ist die KI in der Lage, strukturierte Eingaben als Intent aufzunehmen und zu verarbeiten (zu "verstehen", damit die gewünschte Ausgabe entsteht). Die Eingabe kann dabei in einfacher, klarer Form sein wie z.B. ein Befehl im Stil von Befehlen/Aufgaben, oder einer Programmiersprache mit vorgegebener Technologie und technischen Details ("was" "wie" und ggf. auch "wo" und "wann" gemacht werden soll), bis hin zu abstrakten Absichten in Prosa oder Textform. Denkbar sind ebenfalls gesprochene Eingaben oder Input aus verschiedenen gemischten Quellen (inkl. Z.B. Analyse- oder Monitoring-Systemen), und/oder Dateibasiert, und/oder in Maschinensprache.

In bevorzugten Ausführungsformen der Erfindung können die Eingabemöglichkeiten auch weiteren Kriterien unterliegen, u.A. einer AAA (authentication, authorization, accounting), Zugangskontrolle, Plausibilitätskontrolle, DLT (Distributed-Ledger-Technologie) -basierter ID und/oder Tokens.

Die KI kann trainiert und feinjustiert werden, vorzugsweise mit technischen Ziel-/bzw. Absichtserklärungen als Eingabe und darauffolgender "Interpretation" und Ausgabegenerierung. Vorteilhaft ist es, wenn iterative Verbesserungen erfolgen, z.B. Verbesserung der Klarheit der Eingabe, Bereitstellen von Kontextinformationen und/oder Korrektur der gewünschten Ausgabe, um die KI zu verbessern.

In Abhängigkeit verschiedener Faktoren, unter anderem je nachdem wie die KI trainiert ist, und/oder wie "gut" (umfangreich, klar, eindeutig, korrekt...) der Input ist, und/oder wie bekannt der Kontext ist, und/oder wie lernfähig die KI ist; kann die Eingabe direkt verarbeitet werden, und/oder weitere Schritte notwendig machen: Lieferung von Klärungen, (ggf. mehr) Kontext, (mehr oder besserer) Eingabe, und/oder weiteren Inhalten (ggf. extern, z.B. als Link).

Vorzugsweise erfolgt eine iterative Berichtigung und/oder Anpassung in Form von weiteren Eingaben und Ausgabekontrolle, z.B. in Form eines Chats. Sofern notwendig, erfolgt die Iteration bis die generierte Policy den Ansprüchen des Nutzers, und/oder der fehlerfreien Anwendung auf ein System, bezüglich des Ziels entspricht. Chat bedeutet in dieser vorteilhaften Ausführungsform textbasierte Ein- und Ausgaben in jeweils einem Feld, wobei die Eingabe über den Benutzer, und/oder andere Systeme kommt und die Ausgabe von der KI generiert wird und vorzugsweise auch direkt an andere Systeme weitergegeben werden kann. Text bedeutet ebenfalls Code, und ergänzend können auch dateibasierte (über einen upload/download) bzw. maschinenlesbare Ein- und Ausgaben benutzt werden.

Beispiele (aus dem Mobilfunkbereich, aber die Prinzipien können auch in anderen Bereichen angewandt werden) von Policies oder Teilen von Policies und/oder Regeln sind: lokale Planungsparameter wie Antennentilt oder Azimuth oder Energieabstrahlung; Zell-Nachbarschaften; Handover/Redirect-Vorgaben wie Schwellwerte; Frequenzlayer-spezifische Konfigurationen wie z.B. für 1800MHz; Performance-KPI-bedingte Vorgaben/Anpassungen; RSRP oder SINR Vorgaben; Downlink/Uplink (Daten-)Durchsatz; Latenzzeitrelevante Konfigurationen wie z.B. Priorisierung; Kapazitätsverwaltungsvorgaben wie z.B. Radio Ressource Blocks; Gruppierungen von Objekten wie z.B. Zellen; Aufräum-/Korrektur-/Konsistenzcheck-Aufgaben wie z.B. ungültige/unpassende Konfigurationen entfernen; Priorisierung von Policies/Regeln/Objekten/Vorgaben absolut oder relativ oder dynamisch oder mit Abhängigkeiten; gesetzlichen Vorgaben; technischen (Rahmen-) Bedingungen; fachliche Vorgaben; geschäftlichen Vorgaben und/oder Sicherheitsvorgaben; Services; Netzfunktionen (VNF, CNF, PNF); Network Slices; speziellen Netze und/oder Netzeigenschaften.

Weitere dem Fachmann bekannte Beispiele für typische Policies (bzw. Planungsvorgaben) aus dem Mobilfunknetz(-management) beziehen sich auf Grundkonfigurationen wie Zell-RACH (Random Access Channel) bzw. RSI (Root Sequence Index), Zell-PCI (Physical Cell Identifier), Zell Ankerrelationen, TAI (Tracking Area Identity) bzw TAC (Tracking Area Code) und Zell-Nachbarschaftsbeziehungen (engl. ANR: Automatic Neighbor Relations).

Von Vorteil ist es auch, werden die Ergebnisse der Anwendung der generierte Policies und/oder der Anwendung der zusammengefassten Policy und/oder die Anwendung auf einen Digitalen Twin und/oder die Anwendung auf ein weiteres System genutzt werden, um die KI zu verbessern, und/oder die Eingabe zu verbessern, und/oder die Ausgabe zu verbessern, und/oder die Dokumentation bzw. Spezifikation und/oder das Datenmodell zu verbessern, und/oder einen Standard zu verbessern.

Ebenso ist es vorteilhaft, wenn die Eingabe und/oder die Ausgabe eine absolute und/oder relative Gewichtung und/oder Priorität enthält, und/oder die Eingabe und/oder Ausgabe eine absolute und/oder relative geografische Angabe enthält. Die Nutzung von Prioritäten von Policies/Regeln/Objekten/Vorgaben, beispielsweise absoluten, relativen, dynamischen und/oder mit Abhängigkeiten ist eine bevorzugte Ausführungsform der Erfindung, sowohl bei der Erstellung der Policies, als auch beim Stacking, Testen und E2E.

Bevorzugt Einsatzgebiete für das erfindungsgemäße Verfahren sind Services, insbesondere Netzfunktionen (VNF, CNF, PNF), und/oder die Generierung von Network Slices, und/oder die Generierung von Campusnetzwerken, und/oder die Generierung von speziellen Netzen und/oder Netzeigenschaften.

Eine bevorzugte Ausführungsform des Verfahrens wird anhand zweier Figuren näher erläutert. Hierbei zeigt
Figur 1: einige Zusammenhänge des Aufbaus der KI, und der erfindungsgemäßen Iteration mit einer KI, und
Figur 2: Eine Darstellung der Zusammenhänge in einem Anwendungsfall.

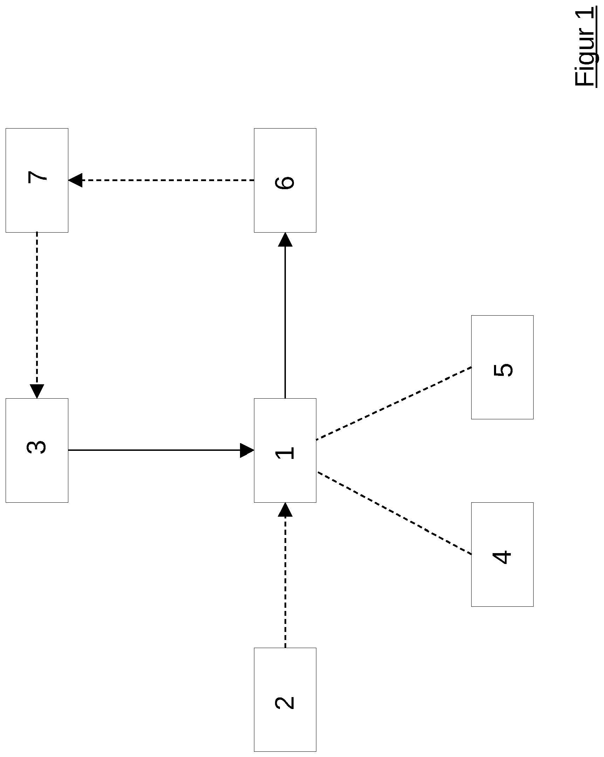

In Figur 1 ist die KI 1 mittels des erläuterten Trainings und (Fein-) Tunings 2 angelernt worden. Basierend auf einer Ziel-/Absichtserklärung (Intent) als Eingabe 3 erfolgt die Interpretation 4 durch die KI 1. Die KI generiert in 5 hieraus die Policy 6 welche dem Nutzer ausgegeben wird. Die Policy 6 wird (optional) zudem einer Verifikation 7 zugeführt, insbesondere einer menschlichen Kontrolle, in welcher die generierte Policy 6 auf ihre Übereinstimmung mit dem Ziel bzw. Intent hin abgeglichen wird. Anhand des Ergebnisses kann es wiederrum zu weiteren Eingaben 3 im Sinne der iterativen Verbesserung führen.

Die Figur 2 zeigt lediglich einige wenige der Vielzahl von Bedingungen, welche den für ein Mobilfunk-Netzwerk zu generierenden Policies zu Grunde liegen. Relevant sind unter anderem die Anforderungen für zu erbringende Services 8, beispielsweise die erforderliche Bandbreite oder Latenz. Unter rechtlichen und regulatorischen Bedingungen 9 fallen beispielsweise die Telekommunikationsgesetzte und Auflagen der Bundesnetzagentur, wie an Ländergrenzen vorgegebene Strahlungs-Maxima zu beachten. Radio Planning 10 ist die planerisch (über Parameter) vorgegebene möglichst gute Abdeckung von Gebieten. Site/Cell Infrastruktur 11 betrifft die physischen Elemente (inkl. Leitungen) und deren Konfiguration. 12 können Beschränkungen durch eine Cloud sein, denn immer mehr Komponenten eines Systems werden virtualisiert von anderen Orten und/oder anderen Dienstleistern erbracht.

Das Generieren 5 der Policies 6 gemäß Figur 1, das anschließende stacking 13 und die Simulation auf einem Digital Twin 14 basieren hier auf Daten eines zur Verfügung stehenden Inventorys 15. Diese und die folgenden Schritte können dank des erfindungsgemäßen Verfahrens nahe der Echtzeit erfolgen.

Die Verifikation 7 der zusammengestellten Policies erfolgt auf den zuvor dargelegten Verfahrensschritten (und kann auch automatisiert sein) und endet schließlich in dem finalen Output 16, einer validen Policy, welche im realen System ohne Risiko angewendet werden kann.

## Patentansprüche

1. Verfahren zum Generieren vom Regelwerken und/oder Bestimmungen für ein System, umfassend die folgenden Schritte:
- Anlernen einer KI (1) anhand einer technischen Dokumentation und/oder einer Spezifikation (2) und/oder eines Datenmodells,
- Anlernen der KI (1) anhand eines Zielkontextes und/oder einer Eingabemethode,
- Anlernen der KI (1) anhand einer Ausgabemethode und/oder eines Ausgabetyps,
**gekennzeichnet durch,**
- Feinjustierung der KI (1) mit einer technischen Zielerklärung/Absichtserklärung (3) als Eingabe, darauffolgender "Interpretation" und Ausgabegenerierung (5), und iterativen Verbesserungen,
- Nutzung der KI (1) anhand von Intent-basierten Eingaben und automatisch generierter Ausgaben in Form von Policies (6), welche technische Änderungen an einem System beschreiben und auf ein System angewendet werden.

2. Verfahren nach Anspruch 1,
**gekennzeichnet durch,**
iterative Berichtigung und/oder Anpassung der Policies (6) in Form von weiteren Eingaben und anschließender Kontrolle der Policy (6).

3. Verfahren nach Anspruch 1 oder 2,
**dadurch gekennzeichnet,**
**dass** die Ausgabe der Policy (6) in einer Codesprache erfolgt.

4. Verfahren nach einem der vorangegangenen Ansprüche,
**dadurch gekennzeichnet,**
**dass** die Eingabe (4) als abstrakte und/oder komplexe Beschreibung einer Zielkonfiguration eines Systems erfolgt, welche über eine Policy (6) als Ausgabe erreicht werden soll, und/oder die Eingabe (4) als eine konkrete Aufgabe erfolgt, in der eine Konfigurationsanpassung eines Systems über eine Policy (6) als Ausgabe erreicht werden soll.

5. Verfahren nach einem der vorangegangenen Ansprüche,
**dadurch gekennzeichnet,**
**dass** die Eingabe als eine gewünschte Parameter- und/oder Objektänderung eines Systems erfolgt und die Ausgabe als Policy (6) rfolgt, mit der diese Änderung erreicht wird.

6. Verfahren nach einem der vorangegangenen Ansprüche,
**dadurch gekennzeichnet,**
**dass** die KI (1) auf ein System zugreift, um den aktuellen Zustand und/oder Umfang und/oder weitere Informationen zur korrekten Ausgabegenerierung zu nutzen, und/oder die KI (1) auf ein Inventar (15) oder sonstige Datenbasis zugreift, um den aktuellen Zustand und/oder Umfang und/oder weitere Informationen zur korrekten Ausgabegenerierung zu nutzen.

7. Verfahren nach einem der vorangegangenen Ansprüche,
**dadurch gekennzeichnet,**
**dass** die generierten Policies (6) zusammengefasst, d.h. miteinander kombiniert werden, um eine einzige finale Policy (6) zu erhalten.

8. Verfahren nach einem der vorangegangenen Ansprüche,
**dadurch gekennzeichnet,**
**dass** mehrere Policies (6) für eine Konfiguration eines Systems zusammengefasst werden.

9. Verfahren nach Anspruch 8
**dadurch gekennzeichnet,**
**dass** die Policies (6) KI-unterstützt zusammengefasst werden.

10. Verfahren nach einem der vorangegangenen Ansprüche,
**dadurch gekennzeichnet,**
**dass** einzelne oder mehrere Policies (6) und/oder eine zusammengefasste Policy (6) auf einen Digital Twin und/oder ein Testsystem und/oder ein Teilsystem angewandt werden.

11. Verfahren nach einem der Ansprüche 9 oder 10,
**dadurch gekennzeichnet,**
**dass** das Ergebnis der Anwendung bzw. der Anpassung für eine Verifikation (7) genutzt wird, welche als Eingabe für einzelne oder alle Schritte des erfindungsgemäßen Verfahrens eingesetzt wird und/oder zur Verbesserung der KI (1) genutzt wird.

12. Verfahren nach einem der vorangegangenen Ansprüche,
**dadurch gekennzeichnet,**
**dass** die Policies (6) für ein Mobilfunknetzwerk, insbesondere ein RAN, generiert werden.

13. Verfahren nach Anspruch 12,
**dadurch gekennzeichnet,**
**dass** eine oder mehrere Policys (6) für eine Grundkonfiguration genutzt werden, insbesondere für Zell-RACH bzw. RSI, Zell-PCI, Zell Ankerrelationen, TAI bzw TAC und Zell-Nachbarschaftsbeziehungen.

14. Verfahren nach einem der vorangegangenen Ansprüche,
**dadurch gekennzeichnet,**
**dass** die Policies (6) nahe der Echtzeit generiert werden.

15. Verfahren nach einem der vorangegangenen Ansprüche,
**dadurch gekennzeichnet,**
**dass** Policies (6) für Network Slices und/oder für Campusnetzwerke, und/oder für Netzeigenschaften und/oder spezielle Services generiert werden.
